(19) Europäisches Patentamt
European Patent Office
Office européen des brevets

(11) **EP 0 914 590 B1**

(12) **EUROPÄISCHE PATENTSCHRIFT**

(45) Veröffentlichungstag und Bekanntmachung des Hinweises auf die Patenterteilung:
**22.10.2003 Patentblatt 2003/43**

(21) Anmeldenummer: **98924180.7**

(22) Anmeldetag: **23.04.1998**

(51) Int Cl.⁷: $G01D\ 5/14$

(86) Internationale Anmeldenummer:
**PCT/EP98/02397**

(87) Internationale Veröffentlichungsnummer:
**WO 98/048244 (29.10.1998 Gazette 1998/43)**

(54) **VORRICHTUNG ZUR ERMITTLUNG DER POSITION ROTIERENDER WELLEN**

DEVICE FOR DETERMINING THE POSITION OF ROTATING SHAFTS

SYSTEME POUR DETERMINER LA POSITION D'ARBRES EN ROTATION

(84) Benannte Vertragsstaaten:
**DE FR GB IT**

(30) Priorität: **23.04.1997 DE 19716985**

(43) Veröffentlichungstag der Anmeldung:
**12.05.1999 Patentblatt 1999/19**

(73) Patentinhaber: **AB Elektronik GmbH**
**59368 Werne (DE)**

(72) Erfinder:
• **APEL, Peter**
  **D-59394 Nordkirchen (DE)**

• **WILCZEK, Klaus**
  **D-59368 Werne (DE)**

(74) Vertreter: **Hoffmeister, Helmut, Dr. Dipl.-Phys.**
**Patentanwalt**
**Goldstrasse 36**
**48147 Münster (DE)**

(56) Entgegenhaltungen:
**EP-A- 0 368 687       DE-A- 4 141 000**
**DE-A- 4 231 646       DE-U- 29 520 111**

**Beschreibung**

Die Erfindung betrifft eine Vorrichtung zur Ermittlung der Position rotierender Wellen mit den Merkmalen des Oberbegriffs des Anspruchs 1.

Eine gattungsgemäße Vorrichtung ist aus der DE 295 20 111 U1 bekannt. Bei dieser Vorrichtung ist es möglich, über einen Drehwinkel zwischen Welle und Stator von mehr als 90° ein lineares Meßsignal zu erhalten. Dies wird durch geeignete Unterteilungen des Stators erreicht sowie durch spezielle Ausbildungen des mit der Welle verbundenen Ringmagnetelements, das sich nur um einen Bogen, der weniger als 360° einschließt, erstreckt und/oder bei dem sich einer der Pole über einen größeren Winkel erstreckt als der andere. Dieser Sensor ist aber zur genauen Messung nicht mehr geeignet, wenn der Drehbereich, in dem eine lineare Meßspannung abgegeben wird, verlassen wird. Insbesondere bei einer oder mehreren vollen Umdrehungen bestehen Unstetigkeitsstellen im Messverlauf, die eine genaue Positionsbestimmung verhindern.

Ein weiterer Drehwinkelsensor zur Ermittlung der Position rotierender Wellen ist aus der WO 92 10 722 A1 bekannt.

Auf der Welle ist ein zweipolig-radial aufmagnetisierter Ringmagnet angeordnet, der von einem Stator umschlossen ist. Im Stator sind zwei sich gegenüberliegende Luftspalte eingebracht. In einem der Luftspalte ist ein Hallelement angeordnet.

Rotiert der Ringmagnet im Stator, nimmt das Hallelement nur einen Hall-Spannungsverlauf in Abhängigkeit vom Stellungswinkel auf, der ähnlich einer Sinuskurve verläuft. Bei einer Drehung der Welle um 360° ist es damit nur möglich, im linearen Bereich eines Quadranten, also nur von 0° - 90° zu messen. Die gerundeten und abgeflachten Teile des Hall-Spannungsverlaufs sind für Meßzwecke ungeeignet. Zwar folgt dem linearen Bereich im I. Quadrant von 0° bis 90° ein weiterer im III. Quadranten von 180 bis 270°, so kann dieser durch die dazwischenliegenden gerundeten und abgewinkelten Teile nicht für eine Messung der Position innerhalb einer Volldrehung genutzt werden.

Aus der WO 95 14 911 A1 ist ein Drehwinkelsensor bekannt, der aus einer stationären und einer rotierenden Formation besteht. Die stationäre Formation weist zwei halbmondförmige Statorteilelemente auf, die unter Belassung einer Abstandsausnehmung sich gegenüberliegend angeordnet sind. Die rotierende Formation ist ein ringförmig ausgebildetes Magnetelement, das von einer Magnethalterungseinheit gehalten ist, die mit einer Welle verbunden ist. Nachteilig ist, daß in der Abstandsausnehmung nur ein Hall-Element angeordnet ist. Hierdurch ist es nur möglich, eine Stellung der Welle zwischen 0° und 90° festzustellen.

Eine Meßanordnung zur Bestimmung der Torsion einer rotierenden Welle ist aus der DE 42 31 646 A1 bekannt. Allerdings werden hier auf die Welle zwei ringförmige Körper gesetzt. Die Körper werden durch Zwischenringe auf der Welle gehalten und mit Zähnen versehen, zwischen denen Lücken liegen. Über einen Kunststoffring ist ein weiterer Körper mit Zähnen befestigt, so daß ein Luftspalt entsteht. Um die Körper ist ein Joch ringförmig starr herumgelegt, so daß vier Spulen ringförmig eingebettet sind. Vorsprünge bilden einen weiteren Luftspalt. An die Spulen wird eine Wechselstromquelle angelegt und damit ein magnetisches Wechselfeld induziert. Bei einer Torsion der Welle kommt es zu einer Verstellung der beiden Meßkörpereinheiten zueinander. Die sich dadurch verändernde Spannung in den Empfangsspulen ist hierfür ein Meßwert.

Eine Vorrichtung zur Messung der Torsion und/oder einer relativen Winkelbewegung beschreibt die DE 42 32 993 A1, bei der auf einer Seite einer ersten Spulenanordnung erste und zweite ananasabschnitt- oder apfelsinenförmig ausgebildete Ringsegmente in unterschiedlicher Breite und im gleich großen Abstand angeordnet sind. Auf einer der Seitenflächen einer zweiten Spulanordnung sind dritte, vierte und fünfte ähnlich ausgebildete Ringsegmente aufgebracht. Gemessen werden dann mit dieser Vorrichtung zwei gerade verlaufende Kurven, deren Ausgangssignale im Kreuzungspunkt 0 sind, was einer Torsion oder Winkelbewegung entspricht.

Letztendlich ist eine Anordnung zur Bestimmung der Torsion, des Torsionsmomentes und/oder eines Drehwinkels wenigstens zweier miteinander verbundener Wellen aus der DE 42 32 994 A1 bekannt, bei der im Verbindungsbereich beider Wellen zwei Spulenanordnungen unter Belassung eines Luftspaltes angeordnet sind. Bei der nach dem Transformatorprinzip arbeitenden Anordnung werden allerdings nur sich verändernde Spannungen in Abhängigkeit von einer Drehwinkeländerung erfaßt.

Ausgehend von einer Vorrichtung der eingangs genannten Art liegt der Erfindung die Aufgabe zugrunde, die Meßmöglichkeiten, insbesondere im gesamten Winkelbereich von 0° bis 360° zu verbessern. Darüber hinaus soll die Torsion wenigstens einer rotierenden Welle feststellbar sein.

Erfindungsgemäß wird diese Aufgabe durch eine Auswerteinheit gelöst, die mit den beiden in dem Statorelement angeordneten Hall-IC-Elementen verbunden ist, die

- einen von jedem Hall-IC-Element gemessenen Hall-IC-Spannungsverlauf aufnimmt,
- jeden aufgenommenen Fluß-Spannungsmeßwert einem Stellungswinkel zuordnet, und
- aus den den Fluß-Spannungsmeßwerten zugeordneten Stellungswinkeln den tatsächlichen Stellungswinkel rechnet und als Ausgangssignal ausgibt.

Die mit der Erfindung erzielten Vorteile bestehen insbesondere darin, daß zwei Hall-IC-Spannungsverläufe gemessen werden, und mit den in der Auswerteeinheit hinterlegten Charakteristiken der Vorrichtung verglichen werden. Bei der Verwendung der erfindungsgemäßen Vorrichtung als Drehwinkelsensor ist es möglich, Stellungen der Welle zwischen 0° und 360° zu erfassen und damit die Meßmöglichkeiten im Vergleich mit bekannten Drehwinkelsensoren zu vervielfachen.

Die so arbeitende Auswerteeinheit ermöglicht es demnach, einen Hall-IC-Spannungsverlauf als Meßkurve und den zweiten Hall-IC-Spannungsverlauf als Entscheidungskurve einzusetzen. Sie ermöglicht es darüber hinaus, wechselseitig auf die linearen Bereiche jeden der Hall-IC-Spannungsverläufe zu schalten, so daß zwischen 0° und 360° immer in einem geradlinig verlaufenden Kurvenbereich gearbeitet werden kann. Hierdurch wird nicht nur eine 360°-Messung an sich, sondern eine 360°-Messung mit sehr hoher Genauigkeit ermöglicht. Die Auswerteeinheit kann als Mikrorechner oder Anwender-Rechner-Schaltkreis, oder auch ASIC genannt, ausgebildet sein. Sie sollte wenigstens ein Rechenwerk (CPU) aufweisen, das mit einer Speichereinheit verbunden ist. An das Rechenwerk sind eingangsseitig zwei parallel zueinanderliegende Analog-Digital-Wandler angeordnet. Ausgangsseitig steht ein analoges oder ein digitales Ausgangssignal an. Das analoge Signal kann durch einen Digital-Analog-Wandler angegeben werden, der ausgangsseitig mit dem Rechenwerk verbunden ist. Ist mit dem Rechenwerk ein CAN-BUS-Interface verbunden, steht das digitale Ausgangssignal an. Mit einem der beiden Analog-Digital-Wandler ist jeweils eines der Hall-IC-Elemente verbunden. Am Digital-Analog-Wandler steht das Ausgangssignal an. Anstelle eines Digital-Rechenwerks kann auch ein Analog-Rechenwerk vorgesehen werden, das dann nur noch mit der Speichereinheit verbindbar ist. Das Rechenwerk erlaubt eine einfache und komfortable Auswertung der ermittelten Werte und eine Ausgabe der korrekten Winkelstellung der Welle. Bei einem Torsionssensor ist an jedem Drehwinkelsensor eine solche Einheit angeordnet. Die Differenz der unterschiedlichen Ausgangssignale kann dabei als Maß für die Torsion bzw. ein Torsionsmoment sein.

Auf der Welle können zwei Drehwinkelsensoren gemäß Anspruch 1 nebeneinander angeordnet sein und so einen Torsionssensor ausbilden.

Dieser Torsionssensor ist also dadurch gekennzeichnet,

- daß auf wenigstens einer Welle ein erstes und ein zweites zweipolig-radiales Ringmagnetelement angeordnet ist,
- daß jedes Ringmagnetelement von einem Statorelement umgeben ist, in dem um einen gleichen Winkel versetzt jeweils wenigstens drei Luftspalte eingebracht sind, und
- daß in jeweils zwei nebeneinanderliegenden Luftspalten jedes Statorelementes jeweils ein Hall-IC-Element angeordnet ist.

Dadurch, daß auf einer Welle zwei Drehwinkelsensoren angeordnet sind, läßt sich nicht nur die Position der rotierenden Welle, sondern auch deren Torsion ermitteln. Die Torsion bzw. ein entstehendes Drehmoment wird durch die sich innerhalb der Hall-IC-Spannungsverläufe ergebenden unterschiedlichen Fluß-Spannungsmeßwerte festgestellt und ausgegeben. Das Anordnen von zwei Drehwinkelsensoren auf einer Welle bringt darüberhinaus den Vorteil, daß bei Ausfall eines Sensors der zweite Sensor immer noch präzise weiterarbeitet. Darüberhinaus können beide Sensoren zur gegenseitigen Kontrolle ihrer Funktion verwendet werden.

In jedem der Statorelemente können vier Luftspalte eingebracht sein. Sie sind um einen Winkel von jeweils 90° untereinander beabstandet. An zwei solcher nebeneinanderliegender Luftspalte ist jeweils ein Hall-IC-Element angeordnet. Die Anordnung der vier Luftspalte sichert die Balance des gesamten Systems. Die um einen Winkel von 90° versetzt angeordneten Hall-IC-Elemente ergeben zwei Hall-IC-Spannungsverläufe, die untereinander um 90° versetzt zueinander verlaufen. Hierdurch wird gewährleistet, daß in jedem Quadranten ein linearer Bereich des Hall-IC-Spannungsverlaufes positioniert ist, so daß eine Ermittlung der Position zwischen 0° und 90°, 90° und 180°, 180° und 270° sowie 270° und 360° gegeben ist. Eine der beiden Hall-IC-Spannungsverläufe bildet dabei die Entscheidungskurve. Die Hall-IC-Spannungsverläufe übernehmen die Funktion der Entscheidungskurve insbesondere mit ihrem gekrümmten und abgeflachten Verlauf. Der linear ansteigende Verlauf der jeweiligen Kurve wird hingegen in vorteilhafter Weise als Meßkurve verwendet.

Jedes Ringmagnetelement kann von einem Ringmagnetaufnahmelement gehalten sein. Das Ringmagnetaufnahmelement kann mit der Welle verbunden sein. Das Ringmagnetaufnahmelement erleichtert insbesondere die Justierung und Aufnahme des Ringmagnetelementes.

Bei einer Messung der Torsion kann von der Welle eine axial verlaufende Zunge abgespalten sein und einendes gehalten werden. Durch diese Querschnittsänderung ist eine Torsion der Welle exakter meßbar. Anstelle der Zunge kann die Welle für die Torsionsmessung in einem bestimmten Abschnitt querschnittsverringert werden. Auch ist die Zwischenschaltung eines elastischen Materials zwischen zwei starren Wellenenden möglich. Die Welle kann auch geteilt ausgebildet werden. Auf jeder Teilwelle ist dann im Bereich der Verbindung jeweils ein Drehwinkelsensor positioniert, die zu einem gemeinsamen Torsionssenor zusammengeschaltet werden können.

Jedes Statorelement kann wenigstens mit einem Gehäuse umgeben sein. Bei einem Drehwinkelsensor ist das Gehäuse zugleich äußerer Abschluß des Sensors. Bei einem Torsionssensor können zwei solcher Gehäuse Einsatz finden. Beide Statorelemente können aber auch von einem gemeinsamen Gehäuse umgeben werden, das zugleich den Bereich der Torsions-Meßstrecke mitumschließt.

Die Erfindung ist in der Zeichnung dargestellt und wird im folgenden näher beschrieben. Es zeigen:

Fig. 1:  einen Drehwinkelsensor in einem schematisch dargestellten Längsschnitt;

Fig. 2  einen Schnitt durch einen Drehwinkelsensor gemäß Fig. 1 entlang der Linie II - II;

Fig. 3  eine Auswerteeinheit für einen Drehwinkelsensor gemäß den Fig. 1 und 2;

Fig. 4  einen Hall-IC-Spannungsverlauf der beiden Hall-IC's in Abhängigkeit vom Stellungswinkel eines mit einer Welle verbundenen Ringmagnetelements eines Drehwinkelsensors gemäß Fig. 1 und 2;

Fig. 5  einen Torsionssensor, aufgebaut aus zwei auf einer Welle angeordneten Drehwinkelsensoren gemäß den Fig. 1 bis 4;

Fig. 6  einen Schnitt durch den ersten Winkelsensor eines Torsionssensors gemäß Fig. 5 entlang der Linie VI - VI;

Fig. 7  einen Schnitt durch den zweiten Winkelsensor eines Torsionssensors gemäß Fig. 5 entlang der Linie VII - VII und

Fig. 8  einen vergrößerten Ausschnitt der Welle, auf dem der Torsionssensor gemäß den Fig. 5 bis 7 angeordnet ist.

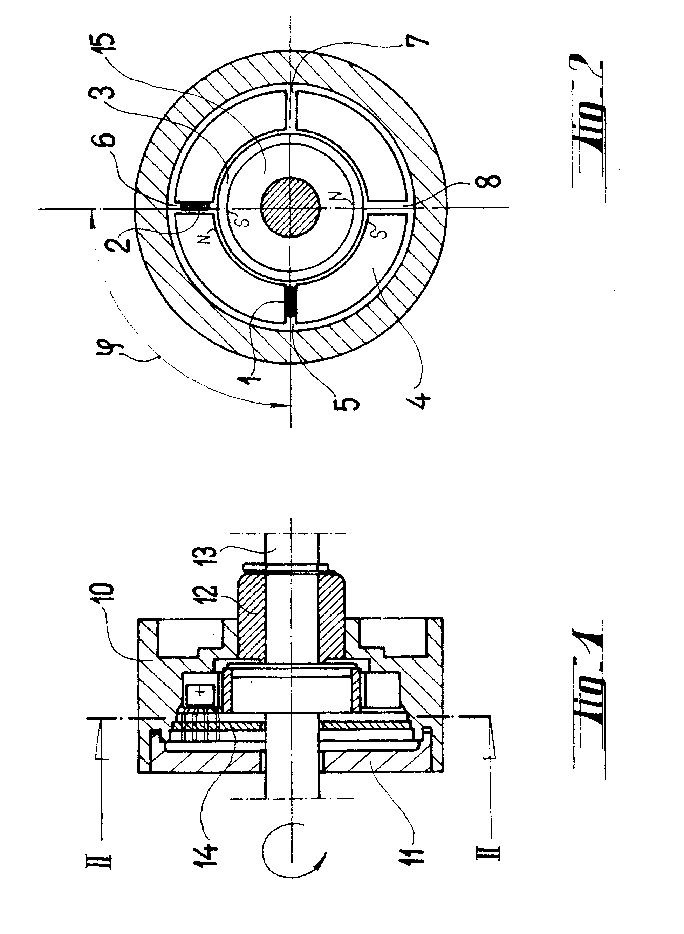

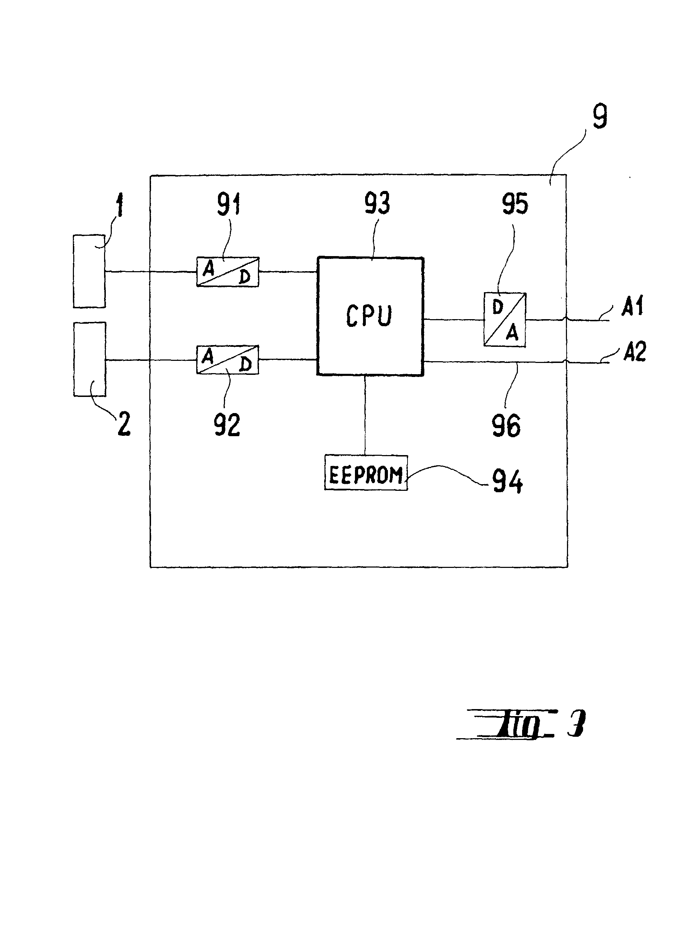

Ein Drehwinkelsensor ist in den Fig. 1 und 2 gezeigt.

Er weist

- ein Ringmagnetelement 3 auf, das von einem Ringmagnetaufnahmeelement 15 gehalten ist, das mit einer Welle 13 verbunden ist, und
- ein Statorelement 4, in das jeweils um einen Winkel φ von 90° ein Luftspalt 5, ein Luftspalt 6, ein Luftspalt 7 und ein Luftspalt 8 eingebracht sind, sowie
- ein Gehäuse 10, das das Ringmagnetelement 3 umgibt.

Erfindungswesentlich ist, daß im Luftspalt 5 ein Hall-IC-Element 1 und im Luftspalt 6 ein Hall-IC-Element 2 angeordnet ist. Hierdurch sind beide Hall-IC-Elemente 1, 2 um 90° versetzt zueinander angeordnet.

Beide Hall-IC-Elemente 1, 2 sind auf eine Leiterplatte 14 geführt, von der ein CAN-BUS oder ein analoges Signal nach außen geführt wird. Das Gehäuse 10 ist der Leiterplatte 14 gegenüberliegend mit einem Deckel 11 verschlossen. Die Welle 13 bewegt sich in einer Lagerbuchse 12, die im Gehäuse 10 angeordnet ist.

Wie Fig. 2 zeigt, ist das Ringmagnetelement 3 zweigeteilt. Das eine Halbkreissegment hat außen umgreifend eine Nordund innen umgreifend eine Süd-Polung. Die zweite Ringmagnetelement-Hälfte hat innen umgreifend eine Nord- und außen umgreifend eine Süd-Polung. Hierdurch entsteht ein zweipolig-radiales Ringmagnetelement, das sich wie ein Stabmagnet verhält. Der Magnetfluß verläuft in den mit N und S bezeichneten Bereichen radial. Lediglich im Teilungsbereich sind Feld-Ungleichmäßigkeiten vorhanden.

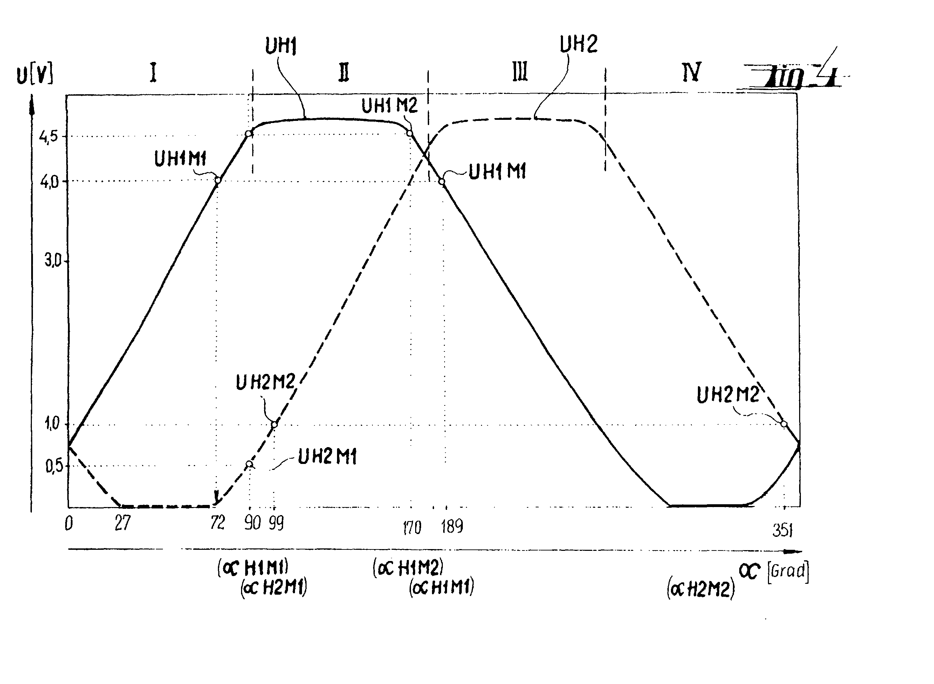

Bei den Hall-IC-Elementen handelt es sich um herkömmliche Hall-Meßelemente, die jeweils als integrierter Schaltkreis realisiert sind. Die beiden Hall-IC-Elemente 1, 2 sind mit einer Auswerteeinheit 9 verbunden (siehe Fig.3).

Die Auswerteeinheit 9 besteht aus einem Rechenwerk (CPU) 93, das mit einer Speichereinheit 94 verbunden. Eingangsseitig sind am Rechenwerk 93 ein Analog-Digital-Wandler 91 und ein Analog-Digital-Wandler 92 angeordnet. Der Analog-Digital-Wandler 91 ist mit dem Hall-IC-Element 1 und der Analog-Digital-Wandler 92 mit Hall-IC-Element 2 verbunden. Ausgangsseitig liegt am Rechenwerk 93 ein Digital-Analog-Wandler 95 an, an dem ausgangsseitig ein analoges Ausgangssignal A1 ansteht. Alternativ kann über ein CAN-BUS Interface 96 ein digitales Ausgangssignal A2 generiert werden.

Diese Konfiguration kann entweder durch einen universellen Mikrorechner oder durch einen Anwender-Rechner-Schaltkreis (ASIC) realisiert werden.

Dreht sich das zweipolig-radiale Ringmagnetelement 3 im Statorelement 4 gemäß Fig. 2, wird ein Magnetfluß nach folgender Beziehung abgegeben:

$$B = K \cdot \alpha \tau$$

mit

B Magnetfluß
K Gerätekonstante
$\alpha\tau$ Ableitungswinkel.

Dieser magnetische Fluß wird von jedem Hall-IC-Element 1, 2 als Hall-IC-Spannungsverlauf UH1, UH2 aufgenommen.

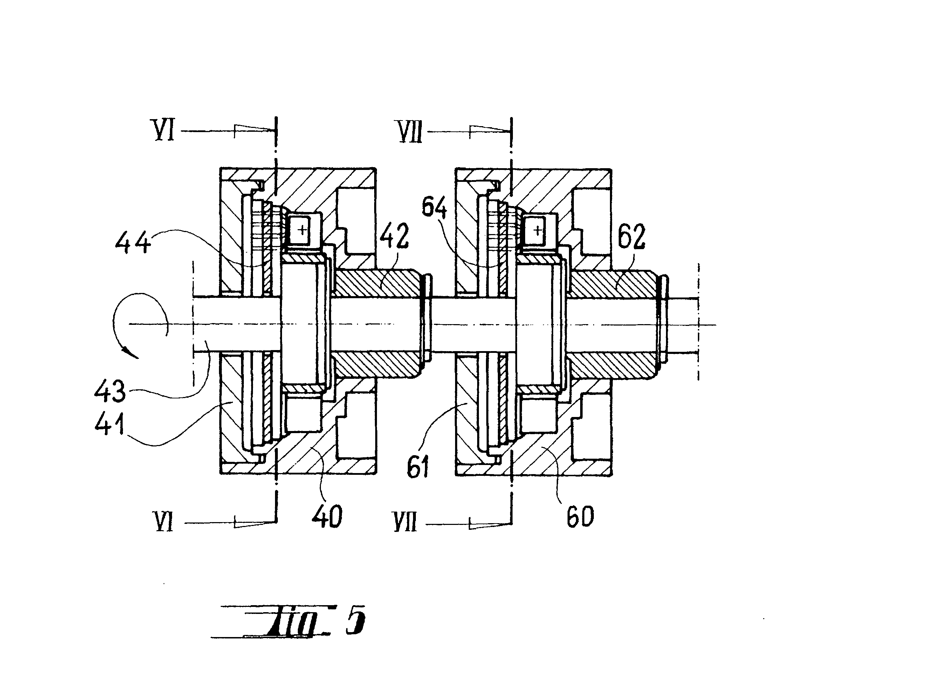

Der Hall-IC-Spannungsverlauf UH1, UH2 in Abhängigkeit vom Stellungswinkel $\alpha$ ist in Fig. 4 gezeigt. Jeder Spannungsverlauf hat eine sinuskurvenähnliche Konfiguration.

Der Hall-IC-Spannungsverlauf UH1 hat im ersten Quadranten I, der von 0° bis 90° reicht, einen linearen Verlauf, an dem sich ein gekrümmter und abgeflachter Verlauf im zweiten Quadranten II von 90° bis 180° anschließt. Der nächste gerade Verlauf liegt im dritten Quadranten III von 180° bis 270°, an dem sich im vierten Quadranten IV von 270° bis 360° wiederum ein abgeflachter, gekrümmter Verlauf anschließt.

Der Hall-IC-Spannungsverlauf UH2 verläuft um 90° versetzt gegenüber dem Hall-IC-Spannungsverlauf UH1, d.h., daß dessen abgeflachter gekrümmter Teil im Erstquadranten, der erste lineare Teil im zweiten Quadranten, im dritten Quardranten dessen gekrümmter und abgeflachter Teil und dessen gerader Teil sich dann im vierten Quadranten befinden. Die Fig. 4 macht die Vorteile der um 90° zueinander angeordneten Hall-IC-Elemente 1, 2 besonders deutlich, denn in jedem Quadranten liegt ein linearer Bereich, der eine genaue Messung der Winkelposition von 0° bis 360° ermöglicht.

Diese beiden Hall-IC-Spannungsverläufe UH1, UH2 sind in die Auswerteeinheit 9 eingegeben und in der Speichereinheit 94 abgespeichert. In der Speichereinheit 94 ist darüber hinaus das Bedienungsprogramm der Auswerteeinheit eingegeben, das wie folgt abläuft:

A) Aufnahme des von jedem Hall-IC-Element 1, 2 gemessenen Hall-IC-Spannungsverlaufs UH1, UH2.
B) Zuordnung jedes aufgenommenen Fluß-Spannungsmeßwertes als Stellungswinkel auf den Hall-IC-Spannungsverläufen.
C) Errechnen aus den den Fluß-Spannungsmeßwerten zugeordneten Stellungswinkeln der tatsächlichen Stellungswinkeln und Ausgabe eines Ausgangssignals A.

Das Programm macht deutlich, daß einer der Hall-IC-Spannungsverläufe UH1, UH2 zum einen Meß- und zum anderen Entscheidungskurve ist, daß bei Festlegung einer der Hall-IC-Spannungsverläufe UH1, UH2 als Meßkurve mit Hilfe der Entscheidungskurve festgelegt wird, welche der ermittelten Fluß-Spannungsmeßwerte einem konkreten Winkel zuzuordnen sind. Die Zuordnung kann dabei in der Speichereinheit 94 tabellarisch vorgenommen werden.

Die Arbeit dieses Programms sei anhand einiger beispielhaft aufgenommener Fluß-Spannungsmeßwerte erläutert:

Bei einer ersten Messung wird ein Fluß-Spannungswert UH1M1 von vier Volt gemessen. Dieser Meßwert von 4 Volt entspricht oft dem Hall-IC-Spannungsverlauf UH1, ein Winkel von 72° bzw. 189°. Bei der Stellung des Ringmagnetelementes 3 im Statorelement 4 wird vom zweiten Hall-IC-Element 2 ein Fluß-Spannungsmeßwert aus UH2M1 von 0,5 Volt gemessen, dem ein Winkel von 90° zuzuordnen ist. Die Auswerteeinheit 9 entscheidet nun, daß der Hall-IC-Spannungsverlauf UH2 die Entscheidungskurve und der Hall-IC-Spannungsverlauf UH1 die Meßkurve ist. Im Programm ist abgelegt, daß bei einem Stellungswinkel $\alpha$H2M1 bei 72° der tatsächliche Ausgangswinkel $\alpha$1 ist und gibt ein dementsprechendes Ausgangssignal A1, A2 ab.

Durch das Hall-IC-Element 1 wird ein Fluß-Spannungswert UH1M2 von 4,5 Volt gemessen. Diesem Wert sind die Winkel 90° und 170° als $\alpha$H1M2 zuzuordnen. Das zweite Hall-IC-Element 2 mißt einen Fluß-Spannungsmeßwert UH2M2 von 1 Volt, dem sowohl ein Winkel von 99° als auch von 351° zuzuordnen sind. Die Logik in Gestalt der Auswerteeinheit 9 entscheidet anhand des Programms, daß der Hall-IC-Spannungsverlauf UH1 Entscheidungskurve und der Hall-IC-Spannungsverlauf UH2 Meßkurve ist. Im Programm ist abgelegt, daß bei diesen Werten der Fluß-Spannungsmeßwert UHM2 von 1 Volt der Stellungswinkel $\alpha$H2M2 als der tatsächliche Stellungswinkel $\alpha$2 auszugeben ist.

Die beiden Beispiele machen den großen Vorteil der um 90° versetzt angeordneten Hall-IC-Elemente deutlich. Wesentlich ist, daß durch die Ergänzung um ein Hall-IC-Element gegenüber dem Stand der Technik sich die Meßmöglichkeit eines Drehwinkelsensors praktisch vervierfacht.

Die Entscheidung, welche Kurve Meß- und welche Kurve Entscheidungskurve wird und welcher Meßwert ausgegeben wird, kann in Form einer Tabelle erfolgen, die, wie bereits erwähnt, in der Speichereinheit abgelegt ist. Der Rechner vergleicht die einzelnen Werte und führt danach unter Zuhilfenahme des Programms die entsprechenden Entscheidungen durch.

Anstelle einer Tabelle kann aus der Steigung festgelegt werden, welche Kurve Meß- und welche Kurve Entscheidungskurve ist. Die Steigung entscheidet darüberhinaus, welcher der gemessenen Werte ausgegeben wird. Versuche haben ergeben, daß die tabellarische Form der Auswertung die genauere darstellt.

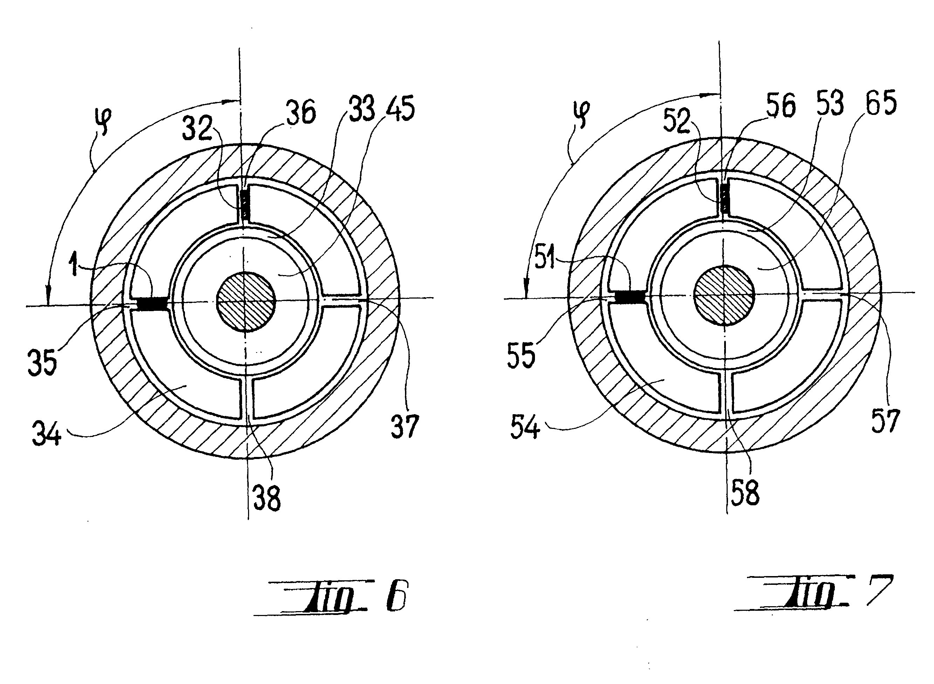

In Fig. 5 ist ein Torsionssensor gezeigt. Er besteht aus zwei auf einer Welle 43 angeordneten Drehwinkelsensoren, wie sie bereits beschrieben wurden.

Jeder Drehwinkelsensor weist ein zweipolig-radiales Ringmagnetelement 33, 53 auf, das von einem Statorelement 34, 54 mit der Welle 43 verbunden ist. Jedes Ringmagnetelement 33, 53 rotiert in einem Statorelement 34, 54, das von einem Gehäuse 40, 60 umgeben und mit einem Deckel 41, 61 verschlossen ist. Vor dem Deckel ist eine Leiterplatte 44, 64 positioniert.

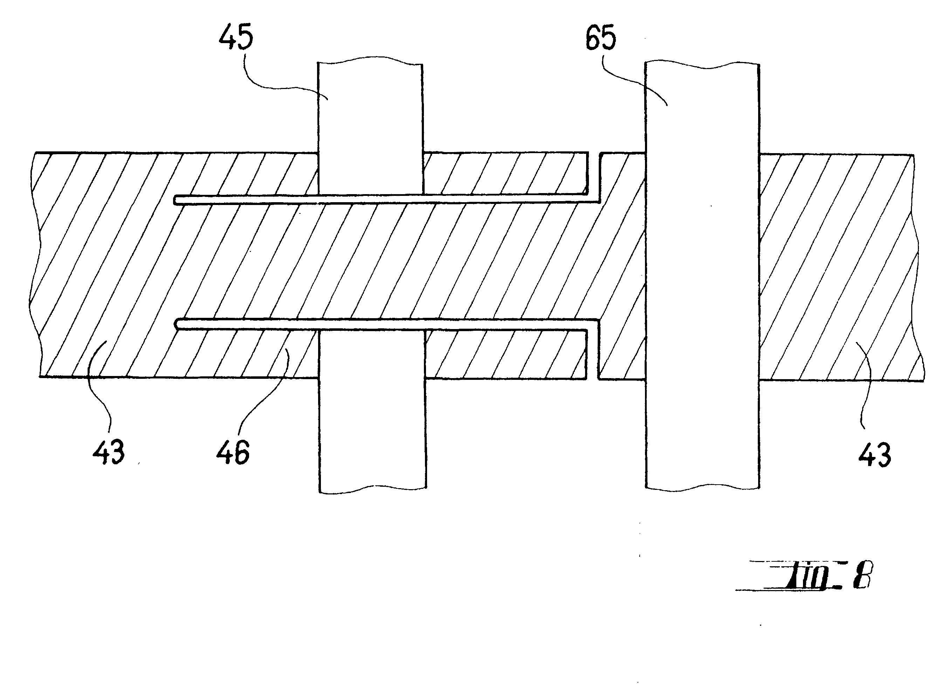

In jedes der Statorelemente 34, 54 sind jeweils vier Luftspalte 35, 36, 37, 38 sowie 55, 56, 57, 58 eingebracht, wie die Fig. 6 und 7 zeigen. In den nebeneinanderliegenden Luftspalten 35, 36 bzw. 55, 56 ist jeweils ein Hall-IC-Element angeordnet, so daß diese gleichfalls um einen Winkel $\varphi\tau$ von 90° versetzt zueinander angeordnet sind. Jedes der Hall-IC-Elemente 31, 32 bzw. 51, 52 ist jeweils mit einer Auswerteeinheit (nicht dargestellt) verbunden, die ebenso wie die bereits beschriebene Auswerteeinheit 9 aufgebaut ist.

Wie Fig. 8 zeigt, ist von der Welle 43 eine Zunge 46 abgespalten. Auf der Zunge 46 ist das Ringmagnetaufnahmeelement 45 und auf der übrigen Welle 43 das Ringmagnetaufnahmeelement 65 angeordnet. Die Zunge 46 ermöglicht eine feinere und exaktere Messung der Torsion der Welle 43. Die Welle 43 ist dabei von einer Lagerbuchse 62 und die Zunge 46 von einer Lagerbuchse 42 umgeben.

Beim Rotieren der Welle 43 geben die Hall-IC-Elemente 31, 32 bzw. 52, 52 Hall-IC-Spannungsverläufe ab, die den in Fig. 4 dargestellten Hall-IC-Spannungsverläufen UH1, UH2 entsprechen. Jeder Drehwinkelsensor gibt bei einer Rotation der Welle einen Stellungswinkel $\alpha$ bei Erreichen einer Position als Ausgangssignal A. Liegt keine Torsion vor, sind die beiden Ausgangssignale gleich. Dreht sich die Welle 43 in der Zunge 46, wird die Verdrehung durch unterschiedliche Ausgangssignale repräsentiert, deren Differenez ein Maß für die Torsion bzw. den Torsionswinkel ist.

Der Vorteil des beschriebenen Torsionssensors besteht darin, daß die Torsion der Welle und zugleich deren Position ermittelt werden können. Hierdurch lassen sich bei Speicherung der Werte Rückschlüsse auf Materialbeanspruchungen unter ganz bestimmten Winkelstellungen feststellen. Wird der Torsionssensor auf einer Welle 13 installiert, wird durch die redundante Anordnung zweier Drehwinkelsensoren die Meßsicherheit und Genauigkeit erhöht. Fällt einer der Drehwinkelsensoren aus, übernimmt immer noch der zweite die Funktion der Messung der Position der rotierenden Welle. Zum anderen können die Ausgangsspannungen beider Drehwinkelsensoren dazu benutzt werden, um eine gegenseitige Funktionsüberwachung zu garantieren. Eine solche Überwachung ist immer dann vorteilhaft einsetzbar, wenn die Kosten für eine spezielle Überwachungseinheit im Verhältnis zu den Kosten eines in großen Mengen hergestellten Drehwinkelsensors sehr hoch sind.

Bezugszeichenliste:

| | |
|---|---|
| 1, 2 | Hall-IC-Element |
| 3 | Ringmagnetelement |
| 4 | Statorelement |
| 5, 6, 7, 8 | Luftspalt |
| 9 | Auswerteeinheit |
| 10 | Gehäuse |
| 11 | Deckel |
| 12 | Lagerbuchse |
| 13 | Welle |
| 14 | Leiterplatte |
| 15 | Ringmagnetaufnahmeelement |
| 31, 32, 51, 52 | Hall-IC-Element |
| 33, 53 | Ringmagnetelement |
| 34, 54 | Statorelement |
| 35, 36, 37, 38 55, 56, 57, 58 | Luftspalt |
| 40, 60 | Gehäuse |
| 41, 61 | Deckel |
| 42, 62 | Lagerbuchse |
| 43 | Welle |
| 44, 64 | Leiterplatte |
| 45, 65 | Ringmagnetaufnahmeelement |

| 46 | Zunge |
| 91, 92 | Analog-Digital-Wandler |
| 93 94 | Speichereinheit |
| 95 | Digital-Analog-Wandler |
| 96 | CAN-BUS-Interface |
| $\alpha$ | Stellungswinkel |
| $\alpha$H1M1, $\alpha$H1M2, $\alpha$H2M1, $\alpha$H2M2 | Stellungswinkel |
| U | Spannung |
| UH1, UH2 | Hall-IC-Spannungsverlauf |
| UH1M1, UH1M2, UH2M1, UH2M2 | Fluß-Spannungsmeßwert |

| I, II, III, IV | Quadrant |
| A1 | digitales Ausgangssignal |
| A2 | analoges Ausgangssignal |

**Patentansprüche**

1. Vorrichtung zur Ermittlung der Position rotierender Wellen mit

   - wenigstens einem zweipolig-radialen Ringmagnetelement (3) das mit der Welle (13) verbunden ist, und
   - wenigstens einem Statorelement (4) aus einem magnetisch leitenden Material,

   • in dem das Ringmagnetelement (3) angeordnet ist und
   • in dem um einen gleichen Winkel (φ) versetzt wenigstens drei Luftspalte (5, 6, 7, 8) eingebracht sind,
   • wobei in zwei nebeneinanderliegenden Luftspalten (5, 6, 7, 8) jeweils ein Hall-IC-Element (1, 2) angeordnet ist, das bei einer Drehung des Ringmagnetelements relativ zum Statorelement Fluß-Spannungsmeßwerte (UH1M1, UH2M1; UH1M2, UH2M2) abgibt,

   **gekennzeichnet durch** eine Auswerteeinheit (9), die mit den beiden in dem Statorelement (4) angeordneten Hall-IC-Elementen (1, 2) verbunden ist, die

   • einen von jedem Hall-IC-Element (1, 2) gemessenen Hall-IC-Spannungsverlauf (UH1, UH2) aufnimmt,
   • jeden aufgenommenen Fluß-Spannungsmeßwert (UH1M1, UH2M1; UH1M2, UH2M2) einem Stellungswinkel ($\alpha$H1M1, $\alpha$H2M1; $\alpha$H1M2, $\alpha$H2M2) auf den Hall-IC-Spannungsverläufen (UH1, UH2) zuordnet, und
   • aus den den Fluß-Spannungsmeßwerten (UH1M1, UH2M1; UH1M2, UH2M2) zugeordneten Stellungswinkeln ($\alpha$H1M1, $\alpha$H2M1; $\alpha$H1M2, $\alpha$H2M2) den tatsächlichen Stellungswinkel ($\alpha$1; $\alpha$2) rechnet und als Ausgangssignal (A1, A2)

2. Vorrichtung nach Anspruch 1, **dadurch gekennzeichnet,**

   - **daß** auf wenigstens einer Welle (43) ein erstes und ein zweites zweipolig-radiales Ringmagnetelement (33, 53) angeordnet ist,
   - **daß** jedes Ringmagnetelement (33, 53) von einem Statorelement (34, 54) umgeben ist, in dem um einen gleichen Winkel (φ) versetzt jeweils wenigstens drei Luftspalte (35, 36, 37, 38, 55, 56, 57, 58) eingebracht sind, und
   - **daß** in jeweils zwei nebeneinanderliegenden Luftspalten (35, 36, 37, 38, 55, 56, 57, 58) jedes Statorelementes (34, 54) jeweils ein Hall-IC-Element (31, 32, 51, 52) angeordnet ist.

3. Vorrichtung nach Anspruch 2, daß von der Welle (43) eine axial verlaufende Zunge (46) abgespalten und einendes gehalten ist oder daß die Welle aus zwei miteinander verbundenen Teilwellen besteht.

4. Vorrichtung nach Anspruch 1 oder 2 oder 3, **dadurch gekennzeichnet, daß** die Auswerteeinheit (9) als Mikrorechner oder Anwender-Rechner-Schaltkreis (ASIC) ausgebildet ist und wenigstens aufweist

   - ein Rechenwerk (CPU) (93),

   • das mit einer Speichereinheit (94) verbunden ist,

- an das eingangsseitig parallel zueinanderliegend ein erster und ein zweiter Analog-Digital-Wandler (91, 92), die jeweils mit einem der Hall-IC-Elemente (1, 2) verbunden sind, und
- an dem ausgangsseitig ein digitales oder analoges Ausgangssignal (A1, A2) ansteht.

**5.** Vorrichtung nach einem der Ansprüche 1 bis 4, **dadurch gekennzeichnet, daß** in jedem der Statorelemente (4) vier, in einem Winkel φ = 90° beabstandet zueinander angeordnete Luftspalte (5, 6, 7, 8) eingebracht sind.

**6.** Vorrichtung nach einem der Ansprüche 1 bis 5, daß jedes Ringmagnetelement (3) von einem Ringmagnetaufnahmeelement (15) gehalten, das mit der Welle (13) verbunden ist.

**7.** Vorrichtung nach einem der Ansprüche 1 bis 6, **dadurch gekennzeichnet, daß** ein Statorelement (4) in wenigstens einem Gehäuse (10) angeordnet ist.

**Claims**

**1.** A device for detecting the position of rotating shafts, comprising

- at least one bipolar-radial ring magnet element (3) connected to the shaft (13), and

- at least one stator element (4) consisting of a magnetically conductive material,

  • in which the ring magnet element (3) is disposed and

  • in which at least three air gaps (5, 6, 7, 8) are provided with equal angle (φ) offset,

  • there being disposed in each of two adjacent air gaps (5, 6, 7, 8) a Hall IC element (1, 2), which on rotation of the ring magnet element relatively to the stator element delivers flux-voltage measurements (UH1M1, UH2M1; UH1M2, UH2M2),

  **characterised by** an evaluation unit (9) connected to the two Hall IC elements (1, 2) disposed in the stator element (4), which evaluation unit (9)

  • receives a Hall IC voltage curve (UH1, UH2) measured by each Hall IC element (1, 2),

  • allocates each received flux-voltage measurement (UH1M1, UH2M1; UH1M2, UH2M2) a position angle (αH1M1, αH2M1; αH1M2, αH2M2) on the Hall IC voltage curves (UH1, UH2), and

  • calculates the actual position angle (α1; α2) from the position angles (αH1M1, αH2M1; αH1M2, αH2M2) associated with the flux-voltage measurements (UH1M1, UH2M1; UH1M2, UH2M2), and delivers the actual position angle as an output signal (A1, A2).

**2.** A device according to claim 1, **characterised in that**

- there is disposed on at least one shaft (43) a first and a second bipolar-radial ring magnet element (33, 53),

- **in that** each ring magnet element (33, 35) is surrounded by a stator element (34, 54) in which there are provided with an equal angle offset (φ) in each case at least three air gaps (35, 36, 37, 38, 55, 56, 57, 58) and

- **in that** a Hall IC element (31, 32, 51, 52) is disposed in each of two adjacent air gaps (35, 36, 37, 38, 55, 56, 57, 58) of each stator element (34, 54).

**3.** A device according to claim 2, **characterised in that** an axially extending tongue (46) is split off from the shaft (43) and is held at one end or **in that** the shaft consists of two interconnected partial shafts.

**4.** A device according to claim 1 or 2 or 3, **characterised in that** the evaluation unit (9) is in the form of a microcomputer or user computer circuit (ASIC) and comprises at least:

- a processor (CPU) (93),

  • which is connected to a memory unit (94),

  • to which there are connected in parallel on the input side a first and a second analog digital converter (91, 92) each connected to one of the Hall IC elements (1, 2) and

  • at the output of which there is a digital analog output signal (A1, A2).

5. A device according to any one of claims 1 to 4, **characterised in that** four air gaps (5, 6, 7, 8) spaced by an angle $\varphi = 90°$ to one another are provided in each of the stator elements (4).

6. A device according to any one of claims 1 to 5, **characterised in that** each ring magnet element (3) is held by a ring magnet receiving element (15) connected to the shaft (13).

7. A device according to any one of claims 1 to 6, **characterised in that** a stator element (4) is disposed in at least one housing (10).

**Revendications**

1. Dispositif de détermination de la position d'arbres en rotation qui inclut

  - au moins un élément magnétique annulaire bipolaire-radial (3) qui est attaché à l'arbre (13), et

  - au moins un élément de stator (4) en matière magnétiquement conductrice,

    • dans lequel l'élément magnétique annulaire (3) est agencé et

    • dans lequel sont ménagés au moins trois entrefers (5, 6, 7, 8) décalés d'angles égaux ($\varphi$),

    • tels que deux entrefers adjacents (5, 6, 7, 8) logent chacun un élément de circuit intégré, ou IC, de Hall, (1, 2), qui engendre des valeurs de mesure de flux-tension (UH1M1, UH2M1; UH1M2, UH2M2) lors d'une rotation de l'élément magnétique annulaire par rapport à l'élément de stator,

    **caractérisé par** une unité d'évaluation (9), qui est connectée aux deux éléments (1, 2) d'IC de Hall agencés dans l'élément de stator (4),

    • qui reçoit un tracé de tension (UH1, UH2) d'IC de Hall mesuré par chaque élément (1, 2) d'IC de Hall,

    • qui associe à chaque valeur de mesure de flux-tension reçue (UH1M1, UH2M1; UH1M2, UH2M2) un angle de position (($\alpha$H1M1, $\alpha$H2M1; $\alpha$H1M2, $\alpha$H2M2) sur les tracés de tension (UH1, UH2) d'IC de Hall, et

    • qui calcule, à partir des angles de position (($\alpha$H1M1, $\alpha$H2M1; $\alpha$H1M2, $\alpha$H2M2) associés aux valeurs de mesure de flux-tension reçues (UH1M1, UH2M1; UH1M2, UH2M2), l'angle de position réel ($\alpha$1; $\alpha$2) et le fournit comme signal de sortie (A1, A2).

2. Dispositif selon la revendication 1, **caractérisé en ce que**

  - un premier et un deuxième éléments magnétiques annulaires radiaux bipolaires (33, 53) sont agencés sur au moins un arbre (43),

  - chaque élément magnétique annulaire (33, 53) est entouré par un élément de stator (34, 54) dans lequel sont ménagés au moins trois entrefers (35, 36, 37, 38, 55, 56, 57, 58) décalés respectivement d'un angle égal ($\varphi$),

  - un élément d'IC de Hall, (31, 32, 51, 52) est agencé respectivement dans deux entrefers adjacents (35, 36, 37, 38, 55, 56, 57, 58) de chaque élément de stator (34, 54).

3. Dispositif selon la revendication 2, **caractérisé en qu'**une languette (46) de tracé axial est séparée de l'arbre (43) et est tenue à une extrémité, ou que l'arbre se compose de deux arbres partiels attachés l'un à l'autre.

4. Dispositif selon l'une quelconque des revendications précédentes, **caractérisé en ce que**. l'unité d'évaluation (9) consiste en un micro-calculateur ou un circuit intégré spécifique à une application (ASIC selon les initiales du terme anglo-saxon application-specific integrated circuit) et comporte au moins:

   - une unité centrale de traitement (CPU selon les initiales du terme anglo-saxon Central processing unit) (93),

     • qui est connectée à une unité de mémoire (94),

     • qui comporte sur son côté entrée un premier et un deuxième convertisseurs d'analogique à numérique adjacents parallèles (91, 92) qui sont connectés chacun à un élément d'IC de Hall (1,2), et

     • qui fournit sur son côté sortie un signal de sortie numérique ou analogique (A1, A2).

5. Dispositif selon l'une quelconque des revendications précédentes, **caractérisé en ce que** des entrefers (5, 6, 7, 8) décalés les uns des autres d'un angle égal $\varphi = 90°$ sont ménagés dans chacun des éléments de stator (4).

6. Dispositif selon l'une quelconque des revendications précédentes, **caractérisé en ce que** chaque élément magnétique annulaire (1) est tenu par un élément récepteur (15) d'élément magnétique qui est attaché à l'arbre (13).

7. Dispositif selon l'une quelconque des revendications précédentes, **caractérisé en ce qu'**un élément de stator (4) est agencé dans au moins un boîtier.

Fig. 2

Fig. 1

_Fig. 3_

Fig. 4

EP 0 914 590 B1

_Fig. 5_

$\mathcal{F}ig. 6$

$\mathcal{F}ig. 7$

EP 0 914 590 B1

FIG. 8